# EUROPÄISCHE PATENTSCHRIFT

(11) **EP 1 086 502 B1**
(45) Veröffentlichungstag und Bekanntmachung des Hinweises auf die Patenterteilung: **10.04.2002**
(21) Anmeldenummer: 99930997.4
(22) Anmeldetag: 03.05.1999
(51) Int. Cl.: H01M 8/00

(54) **STAPEL AUS BRENNSTOFFZELLEN MIT FLÜSSIGKEITSKÜHLUNG UND VERFAHREN ZUR KÜHLUNG EINES BZ-STAPELS**
FUEL CELL STACK WITH LIQUID COOLING AND METHOD FOR COOLING A FUEL CELL STACK
EMPILEMENT DE PILES A COMBUSTIBLE A REFROIDISSEMENT PAR LIQUIDE ET PROCEDE DE REFROIDISSEMENT D'UN EMPILEMENT DE PILES A COMBUSTIBLE

(30) Priorität: 14.05.1998 DE 19821767
(43) Veröffentlichungstag der Anmeldung: 28.03.2001
(73) Patentinhaber: SIEMENS AKTIENGESELLSCHAFT, 80333 München (DE)
(72) Erfinder: WAIDHAS, Manfred, D-90427 Nürnberg (DE); VON HELMOLT, Rittmar, D-91052 Erlangen (DE); BUCHNER, Peter, D-91332 Heiligenstadt (DE); NÖLSCHER, Christoph, D-90419 Nürnberg (DE)
(86) Internationale Anmeldenummer: DE9901313
(87) Internationale Veröffentlichungsnummer: WO9960641

(56) Entgegenhaltungen:
- EP-A- 0 833 400
- WO-A-98/53514
- DE-A- 19 746 301
- GB-A- 1 204 832
- US-A- 4 431 714
- US-A- 4 855 193
- US-A- 5 503 944
- US-A- 5 736 269
- PATENT ABSTRACTS OF JAPAN vol. 018, no. 681 (E-1649), 21. Dezember 1994 (1994-12-21) -& JP 06 275284 A (MITSUBISHI HEAVY IND LTD), 30. September 1994 (1994-09-30)
- PATENT ABSTRACTS OF JAPAN vol. 1999, no. 02, 26. Februar 1999 (1999-02-26) -& JP 10 308227 A (FUJI ELECTRIC CO LTD), 17. November 1998 (1998-11-17)

## Beschreibung

Stapel aus Brennstoffzellen mit Flüssigkeitskühlung und Verfahren zur Kühlung eines Brennstoffzellen(BZ)-Stapels

Die Erfindung betrifft einen Brennstoffzellen(BZ)-Stapel mit Flüssigkeitskühlung, insbesondere zur stationären Anwendung, wobei im Kühlsystemneuartige Dichtrahmen verwendet werden, die den Zwischenraum zwischen benachbarten BZ-Einheiten dicht abschließen und die gleichzeitig Versorgungs- und Verteilungskanäle für das Kühlmittel integriert enthalten.

In der DE 196 49 691 A1 wird bereits eine Flüssigkeitskühlung für einen aus der DE-PS 44 42 285 bekannten BZ-Stapel beschrieben, bei der ein Flüssigkeitstauchbad eingesetzt wird. Diese Konstruktion führt jedoch nur zu einer ungenügend gleichmäßigen Durchströmung des BZ-Stapels mit Kühlflüssigkeit, wenn nicht voluminöse Kühlmittelverteiler eingebaut werden. Der Einbau solcher Verteiler ist jedoch kostenträchtig und wirkt sich nachteilig auf Größe und Gewicht des BZ-Stapels aus.

In der EP 0 833 400 A1 wird eine Brennstoffzelle beschrieben, bei der zur Fixierung des Brennstoffzellenstapels Dichtrahmen vorhanden sind, welche den Zwischenraum zwischen den Separatoren dicht umschließen. Dabei sind im Dichtrahmen Bohrungen für Gase und das Kühlmittel vorgesehen. Weiterhin ist aus der US 5 736 269 A ein Brennstoffzellenstapel und eine Methode zum Pressen der einzelnen Brennstoffzelleneinheit zur Bildung des Stapels bekannt, bei dem im Dichtrahmen ebenfalls Öffnungen vorgesehen sind. Beim Stand der Technik bilden die Bohrungen jeweils Eingänge für Kühlmittelleitungen, die in unterschiedlicher Geometrie durch den Brennstoffzellenstapel verlaufen.

Ausgehend vom Stand der Technik ist es Aufgabe der vorliegenden Erfindung, eine kostengünstige und kompakte Konstruktion zur Flüssigkeitskühlung eines Brennstoffzellen (BZ)-Stapels zu schaffen, bei der eine gute Kühlung über eine gleichmäßige Durchströmung des Brennstoffzellen (BZ)-Stapels gewährleistet ist.

Die Aufgabe ist erfindungsgemäß durch die Merkmale des Patentanspruches 1 gelöst. Weiterbildungen sind in den abhängigen Ansprüchen angegeben. Ein Verfahren zum Betreiben eines so gebildeten Brennstoffzellenstapels ist Gegenstand des Patentanspruches 5.

Gegenstand der Erfindung ist ein Brennstoffzellenstapel, zumindest zwei BZ-Einheiten umfassend, bei dem ein Dichtrahmen den Zwischenraum zwischen den Separatoren der BZ-Einheiten für ein Kühlmedium dicht umschließt und bei dem durchgehende Axialkanäle durch die Stapelung der einzelnen Brennstoffzelleneinheiten mit dazwischenliegenden Stützringen, die axiale und radiale Bohrungen haben, ausgebildet sind.

Bei einer bevorzugten Ausgestaltung der Erfindung überragt der Dichtrahmen seitlich den Umfang des BZ-Stapels. Bei einer weiteren bevorzugten Ausführungsform der Erfindung ist der BZ-Stapel aus einzeln prüfbaren BZ-Einheiten aufgebaut. Bei einer anderen Ausführungsform der Erfindung ist der Dichtrahmen mehrstückig, wobei die Verteilungs- und Versorgungskanäle aus weniger elastischem Material als die abdichtenden eile aufgebaut sind. Möglich ist, daß die Verteilungs- und Versorgungskanäle Rohre sind, die dem Dichtrahmen zusätzliche Stabilität verleihen.

Beim zugehörigen Verfahren zum Betreiben des erfindungsgemäßen BZ-Stapels wird Kühlflüssigkeit durch die Axialkanäle zwischen den BZ-Einheiten des Stapels hindurchgeleitet.

Weitere vorteilhafte Ausgestaltungen der Erfindung ergeben sich aus den nachfolgenden Erläuterungen und der Figurenbeschreibung.

Eine Brennstoffzellen(BZ)-Einheit umfaßt einen Separator oder Kollektorblech, einen Kathodenraum, eine Membran, einen Anodenraum und einen weiteren Separator oder Kollektorblech. Ein BZ-Stapel besteht je nach Anforderungen aus mehreren BZ-Einheiten, die jeweils ca. 0,7 V Spannung liefern. In der Regel wird ein BZ-Stapel ca. 100 bis 150 BZ-Einheiten umfassen.

Der BZ-Stapel ist bis auf den Dichtrahmen vom Stand der Technik bekannt und wird hier nicht weiter beschrieben. Wesentlich für den Betrieb und die Wirtschaftlichkeit der gesamten Brennstoffzellenanlage ist der Dichtrahmen des BZ-Stapels. Der Dichtrahmen kann einstückig, z.B. aus einem Stuck elastischen Materials gegossen, oder mehrstückig, und wiederum aus verschiedenen oder gleichen Materialien, aufgebaut sein. Um die Abdichtungen zueinander und zu den Kollektorblechen zu gewährleisten und um gleichzeitig gegenüber Dickenänderungen der Zwischenräume der BZ-Einheiten und/oder der BZ-Einheiten tolerant zu sein, müssen zumindest Teile des Dichtrahmens aus elastischem Material bestehen. Die Versorgungs- und Verteilungskanäle, die im Dichtrahmen integriert sind, können z.B. aus weniger elastischem Material (Metall, z.B. Leichtmetall (Aluminium) und/oder Kunststoff, z.B. PVC, Polycarbonat oder ähnliches) als die abdichtenden und daher elastischen Teile des Dichtrahmens sein.

Der Dichtrahmen kann aus einem Stück für einen ganzen BZ-Stapel gebildet sein, es kann aber auch pro BZ-Einheit ein Dichtrahmen vorliegen, darüber hinaus können jeweils zwei oder drei oder eine beliebige Anzahl von BZ-Einheiten des BZtapels unter einen Dichtrahmen zusammengefaßt werden. Die Anzahl der Dichtrahmen pro BZ-Stapel hat dabei keinen Einfluß darauf, ob Einzelzellenprüfung möglich ist oder nicht. Zur Einzelzellenprüfung wird der Dichtrahmen abgezogen, nachdem die, je nach Ausführungsform, fehlende(n) Verklammerung(en) durch eine (mehrere) temporäre Aushilfsklammer(n) ersetzt wurden. Wichtig ist, daß eine permanente Dichtung (z.B. durch Klammern, Nieten o.ä.) oder ein temporäres Zusammenpressen für die Zeit von der Prüfung einer BZ-Einheit bis zum Ende ihrer Re-Montage auf dem BZ-Stapel besteht.

Für die Einzelzellenprüfung ist außerdem entscheidend, daß der ggf überstehende Dichtrahmen außen noch einen Freiraum läßt über den die BZ-Einheiten gegriffen werden können. Die Konstruktion ermöglicht dann auf einfache Weise Stichproben, Prüfung und Auswechseln ganzer Zellen des BZ-Stapels.

Im Dichtrahmen können Rohre integriert sein, die die axialen Kühlmittelkanäle (Versorgungs- und Entsorgungskanal) bilden. Bevorzugt ist aber auch die Ausführungsform, bei der sich der axiale Versorgungs- und/oder Entsorgungskanal bei der Montage des BZ-Stapels durch die Stapelung der Dichtrahmen aufeinander lediglich mit Hilfe von Stützringen und Dichtungen ohne zusatzliche Bauteile ausbilden.

Bei einer Ausführungsform der Erfindung hat der Dichtrahmen einen kleineren oder gleichgroßen Umfang wie der BZ-Stapel. In diesem Fall kann der Axialkanal zur Kühlmittelversorgung nicht außerhalb der Fläche der Kollektorbleche angeordnet sein, so daß die Kollektorbleche des Stapels Löcher oder Aussparungen haben, die im BZ-Stapel Teil der axialen Kühlmittelkanäle sind (vgl. Figur 5). Die Ver- und Entsorgungskanäle für das Kühlmedium können dabei sowohl im Dichtrahmen integriert als auch außerhalb des äußeren Dichtrahmens angeordnet sein. Diese Konstruktion vereinigt die Vorteile eines geringen Materialverbrauchs und geringer Masse der Gesamtkonstruktion.

Die Anforderungen an die Eigenschaften des Materials des Dichtrahmens (und auch ihre Komplexität) können bei der Ausgestaltung der Erfindung, bei der der Dichtrahmen den Umfang des BZ-Stapels überragt, sehr viel geringer als bei weiteren flüssigkeitsgekühlten BZ-Stapel sein, weil die Reaktionsgase separat im eigentlichen BZ-Stapel geführt und dort auch abgedichtet werden. Das Kühlmedium wird außerhalb des eigentlichen BZ-Stapels im überstehenden Dichtrahmen geführt. Auch die Anpressung bei der Montage des BZ-Stapels Filterpressentechnik) und die Stromableitung kann getrennt vom Dichtrahmen erfolgen, sofern er hinterher aufgebracht, z.B. gespritzt, wird. Bei einer gestapelten Montage der Dichtrahmen werden bei der Zellstapelung auch die Dichtrahmen gepreßt. Bei der Ausgestaltung mit überstehendem Dichtrahmen erfolgt die Anpressung über die Separatoren und damit entfallen auch diesbezügliche Materialanforderungen an den Dichtrahmen.

Die Verteilung des Kühlmittels, das über den axialen Versorgungskanal auf die Separatoren gelangt, erfolgt über radiale oder horizontale Verteilungskanäle beliebiger Form, Größe und Materials. Dabei kann es sich auch um Verteilungskanäle handeln, wie sie z.B. in der DE-A-196 02315 Titel: "Flussigkeitsgekühlte Brennstoffzelle mit Verteilungskanälen" offenbart wurden.

Gegenuber der luftgekühlten Variante desselben BZ-Stapels wird bei der erfindungsgemäßen Flüssigkeitskühlung wegen der größeren Wärmekapazität des Kühlmediums sogar die Bauhöhe des BZ-Stapels reduziert.

Im folgenden wird die Erfindung noch anhand von Ausführungsbeispielen näher erläutert.

Figur 1 zeigt einen Querschnitt durch einen erfindungsgemäßen BZ-Stapel mit überstehendem Dichtrahmen.
Figur 2 zeigt eine perspektivische Explosions-Ansicht der Ausführungsform aus Figur 1.
Figur 3 zeigt eine Ausführungsform der Erfindung, bei der der Dichtrahmen auch übersteht und die Kollektorbleche und die Membran im BZ-Stapel verklammert.
Figur 4 zeigt einen mehrstückig aufgebauten Dichtrahmen. Figur 5 zeigt eine Ausführungsform, bei der der Dichtrahmen den Umfang des BZ-Stapels nicht überragt im Querschnitt, insbesondere die Anordnung der axialen Versorgungskanäle außerhalb des äußeren Dichtrahmens.

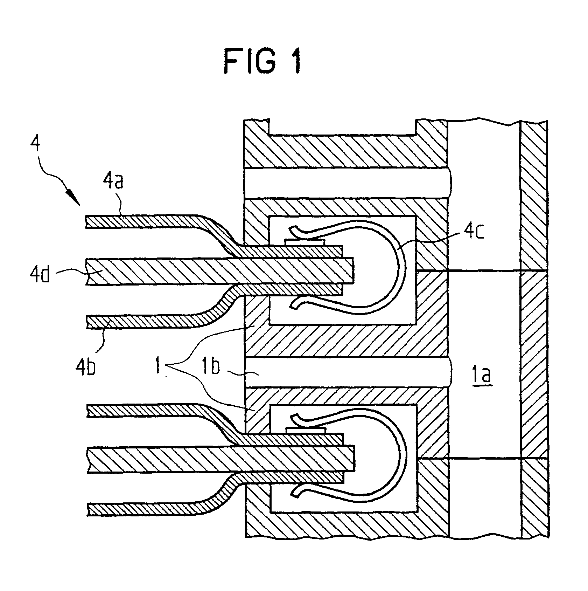

Figur 1 zeigt einen schematischen Aufbau eines erfindungsgemäßen BZ-Stapels. Das Bauteil 4 ist eine BZ-Einheit und besteht aus den gezeigten Kollektorblechen 4a und 4b, die den Anogen- und Kathodenraum begrenzen. Die Bleche 4a und 4b werden durch die Klammer 4c mit der Membran 4d zusammengehalten, die gleichzeitig den Anoden- und Kathodengasraum gasdicht abschließt. Nicht zu sehen ist der Katalysator, die Elektroden und der Stromkollektor, die ebenfalls Bestandteil der BZ-Einheit 4 sind. Das Bauteil 1 ist ein erfindungsgemäßer Dichtrahmen, dessen Durchmesser größer als der des BZ-Stapels ist. Zu erkennen ist einer der axialen Ver- oder Entsorgungskanale 1a, der in Stapelrichtung verläuft. Vom Axialkanal geht der Radialkanal (radialer oder horizontaler Verteilungskanal) 1b ab, durch den das Kühlmittel auf die zu kühlende Fläche, also in den Zwischenraum zwischen zwei BZ-Einheiten strömt.

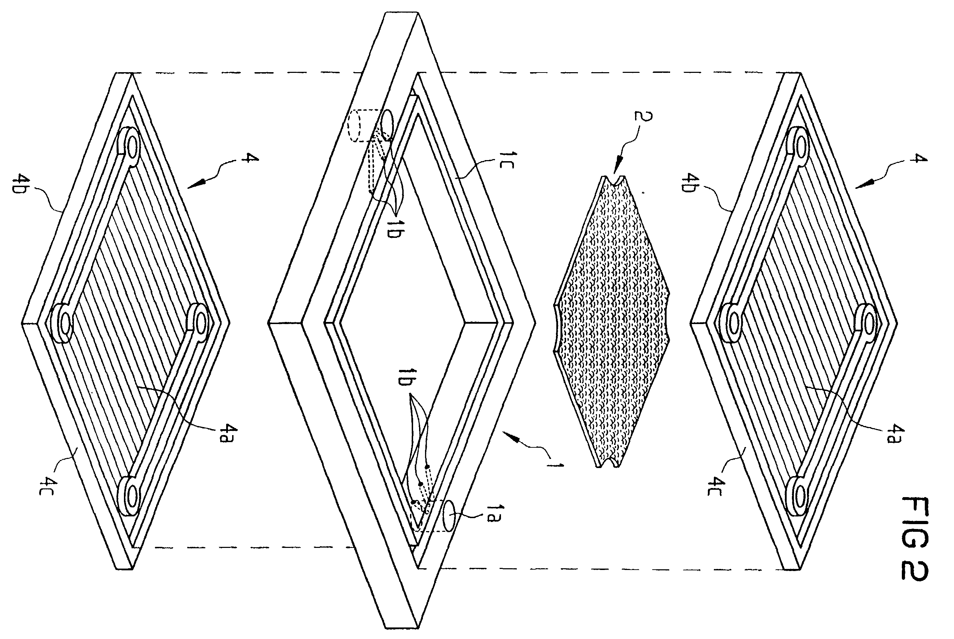

Figur 2 zeigt eine Explosions-Ansicht desselben BZ-Stapels mit einem Kühl- und Kontaktblech 2 zwischen den BZ-Einheiten. Der Dichtrahmen 1 hat zumindest zwei Bohrungen 1a in axialer Richtung (Stapelrichtung), die beim Zusammenbau des BZ-Stapels mindestens einen Versorgungskanal für die Kühlmittelsufuhr und einen Entsorgungskanal für die Kühlmittelentsorgung bilden. Durch die perspektivische Ansicht ist zu erkennen, daß der Dichtrahmen einen größeren Umfang hat als die BZ-Einheit 4. Bei der hier gezeigten Ausführungsform sind die Axialkanäle 1a in dem Stück des Dichtrahmens untergebracht, der über den BZ-Stapel hinausragt. Diese Ausführungsform ist bevorzugt, es sind aber auch andere Anordnungen der Axialkanäle bei überstehendem Dichtrahmen möglich. Von einem Axialkanal weg und zu zumindest einem anderen Axialkanal hin verlaufen die Radialkanäle 1b, die das Kühlmittel auf die zu kühlende Fläche zwischen den einzelnen BZ-Einheiten führen. Die Anzahl der Radialkanäle kann variieren, wobei bevorzugt 1 bis 5 Radialkanäle von einem Axialkanal abzweigen, besonders bevorzugt 3, wie gezeigt. Bevorzugt führt eine gleiche Anzahl von Radialkanälen 1b mit gleichem Durchmesser zur Kühlfläche hin und wieder weg davon, es ist aber auch denkbar, daß die Entsorgungs-Radialkanäle vom Durchmesser und/oder von der Anzahl her verschieden sind von den Versorgungs-Radialkanälen.

Der Dichtrahmen hat eine typische Dicke, die dem Abstand zweier BZ-Einheiten in einem BZ-Stapel entspricht, also ca. 1 bis 5 mm.

Die Radialbohrungen 1b, die die Radialkanäle bilden, sind im Dichtrahmen so angebracht, daß sie eine Durchströmung des Zwischenraumes zwischen den BZ-Einheiten gestatten, um dort die Wärme aus den Zellen abzuführen. Der Dichtrahmen (oder die Dichtrahmen eines BZ-Stapels) bildet so zusammen mit den anliegenden Kollektorblechen 4a und 4b einen gegenüber dem Außenraum und gegenüber den Reaktionsgasräumen (Anoden- und Kathodengasraum) abgedichtetes Kühlsystem. Um die Abdichtung zueinander und zu den Kollektorblechen 4a und 4b zu gewährleisten und um gleichzeitig gegenüber Dickenänderungen der Brennstoffzellen 4 tolerant zu sein, bestehen zumindest Teile des Dichtrahmens 1 aus elastischem Material. Die Materialanforderungen sind aber, verglichen mit denen anderer Kühlsysteme flüssigkeitsgekühlter BZ-Stapel gering, weil die Reaktionsgase nicht innerhalb des Dichtrahmens abgedichtet werden. Die Anpressung bei der Montage des Stapels und die Stromableitung erfolgt auch getrennt vom Dichtrahmen, nämlich im Kontaktblech 2, ähnlich wie bei luftgekühlten BZ-Batterien.

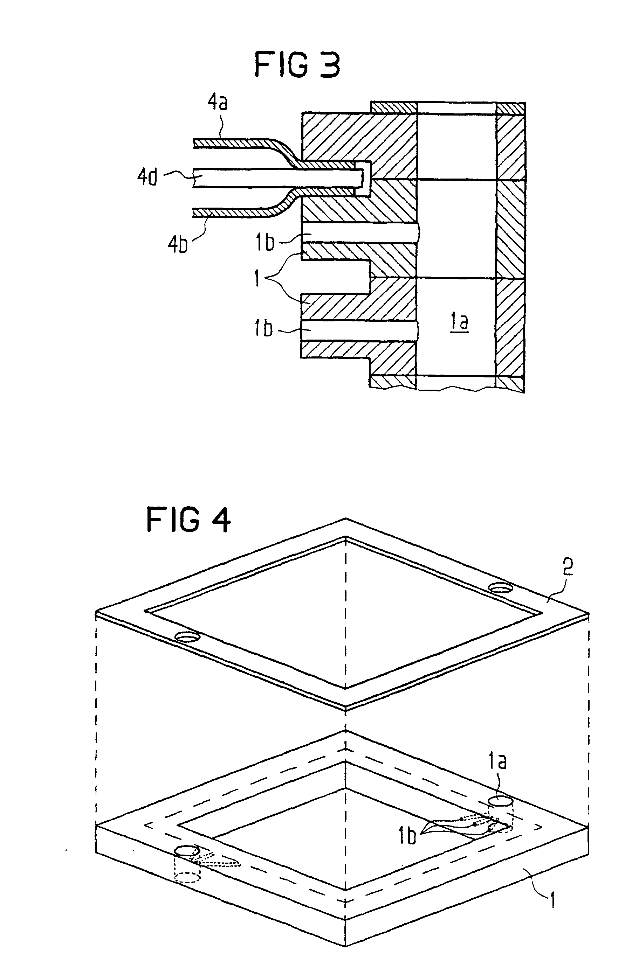

Figur 3 zeigt eine Ausführungsform, bei der der Dichtrahmen die Funktion der Klammern 4c aus Figur 1 übernimmt, die am Rand der BZ-Einheiten aufgeschoben sind und die über den Druck, den sie auf die Kollektorbleche 4a und 4b und die Membrar. 4d ausüben, eine Randabdichtung ermöglichen. Bei dieser Ausführungsform reduziert sich die Anzahl der Teile aus denen ein BZ-Stapel zusammengesetzt ist. Die Figur 3 zeigt einen Querschnitt durch eine Konstruktion ohne Klammern 4c, bei der der Dichtrahmen 1 (gezeigt mit Radialkanälen 1b und Axialkanal 1a) den Anpreßdruck der Kollektorbleche 4a und 4b auf die Membran 4d erzeugt und dadurch die Reaktionsgasräume abdichtet.

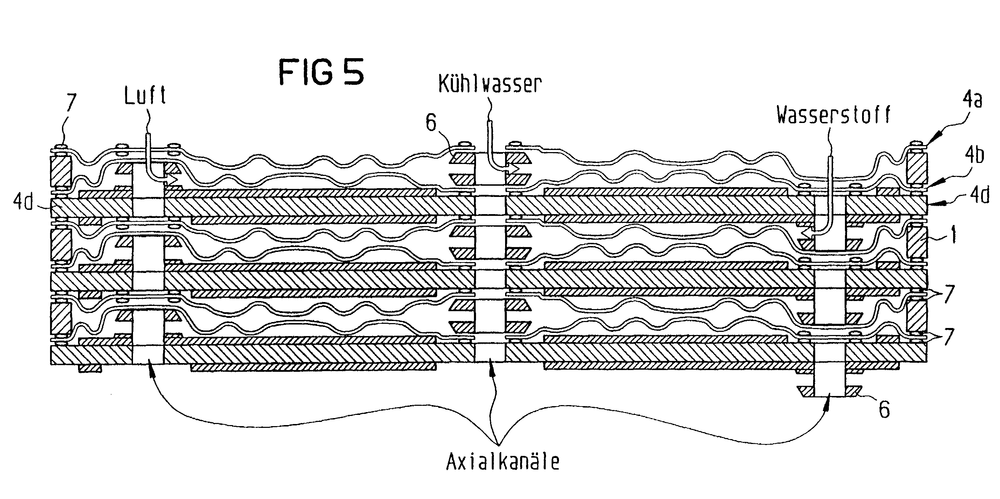

Figur 4 zeigt exemplarisch, wie ein Dichtrahmen auch aus mehren Bauteilen aufgebaut sein kann. Das Bauteil 1 ist bevorzugt aus weniger elastischem Material, weil es die Bohrungen für die Kanäle enthält, wohingegen das Bauteil 2 die Abdichtung des Kühlsystems nach außen bewerkstelligt und entsprechend aus elastischem abdichtendem Material geschaffen ist.

Die Dichtung 2 kann auf den Rahmen 1 aufgespritzt sein und damit wieder eine Einheit (ein Bauteil) bilden.

Schließlich zeigt Figur 5 eine Ausführungsform mit Dichtrahmen innerhalb des BZ-Stapels. Zu sehen ist der Querschnitt durch den BZ-Stapel mit der exemplarischen Anordnung aller Axialkanäle. Als Axialkanal werden alle Versorgungs- und Entsorgungskanäle, die in Richtung des BZ-Stapels verlaufen, bezeichnet. Gemeint sind also die Prozeßgasver- und - entsorgungskanäle sowie der Kühlmittelver- und -entsorgungskanal.

Die kleinen Ellipsoide 7 zeigen die Dichtungen, die jeweils an den Kollektor- und Kühlblechen angebracht sind. Diese Dichtungen sind einfache Flachdichtungen auf den Kollektorblechen. Gewellt gezeigt sind die Kollektorbleche 4a und 4b. An die Membran 4d schließt sich einmal oberhalb (ganz links im Bild) und einmal unterhalb (ganz rechts im Bild) ein Stützring 6 mit Axial- und Radialbohrungen an, durch den das Prozeßgas auf die aktive Zellfläche strömt. In der Mitte der Figur sind Stützringe 6 mit Radialbohrungen gezeigt, die zwischen den Kollektorblechen 4a und 4b liegen. Diese Stützringe 6 sind Bestandteil eines axialen Kühlmittel-Versorgungs- oder Entsorgungskanals 1a und können z.B. aus demselben Material wie der Dichtrahmen, also z.B. aus Kunststoff (Polycarbonat) oder einem Leichtmetall wie Aluminium sein. Über diese Stützringe 6 gelangt das Kühlmittel in die Zellzwischenräume zur Kühlung des Systems. Am Rand des BZ-Stapels erkennt man zwischen den Kollektorblechen den Dichtrahmen 1.

## Patentansprüche

1. Brennstoffzellenstapel mit zumindest zwei Brennstoffzellen(BZ)-Einheiten (4) und dazwischen angeordneten Separatoren (4a, 4b), bei dem ein Dichtrahmen (1) den Zwischenraum zwischen den Separatoren (4a, 4b) der Brennstoffzellen-Einheiten (4) zur Aufnahme eines Kühlmediums dicht umschließt und wobei sich Axialkanäle (1a, 1b) durch die Stapelung der einzelnen BZ-Einheiten (4) mit dazwischenliegenden Stützringen (6), die axiale und radiale Bohrungen haben, ausbilden.

2. Brennstoffzellenstapel nach Anspruch 1, wobei die Versorgungs- und Verteilungskanäle (4a, 4b) für das Kühlmedium in dem Dichtrahmen, (1) integriert sind.

3. Brennstoffzellenstapel nach einem der vorstehenden Ansprüche 1, wobei der Dichtrahmen (1) den BZ-Stapel vom Umfang her überragt.

4. Brennstoffzellenstapel nach einem der vorstehenden Ansprüche, wobei durch einen demontierbaren Aufbau des Dichtrahmens (1) jede Brennstoffzellen(BZ)-Einheit (4) einzeln hinsichtlich ihrer Betriebseigenschaften prüfbar ist.

5. Verfahren zum Betreiben eines Brennstoffzellen(BZ)-Stapels, der gemäß Anspruch 1 oder einem der Ansprüche 2 bis 4 aufgebaut ist, wobei zwischen den einzelnen BZ-Einheiten (4) des Brennstoffzellenstapels die Kühlflüssigkeit durch die Axialkanäle (1a, 1b) im Dichtrahmen (1) hindurchgeleitet wird.

## Claims

1. Fuel cell stack comprising at least two fuel cell (FC) units (4) with separators (4a, 4b) arranged between, in which a sealing frame (1) tightly encloses the gap between the separators (4a, 4b) of the fuel cell units (4) for receiving a cooling medium and wherein axial channels (1a, 1b) are formed by virtue of the stacking of the individual FC units (4) with interlying bearing rings (6), which have axial and radial bores.

2. Fuel cell stack according to claim 1, wherein the supply and distribution channels (4a, 4b) for the cooling medium are integrated in the sealing frame (1).

3. Fuel cell stack according to one of the preceding claims 1, wherein the sealing frame (1) projects beyond the circumference of the FC stack.

4. Fuel cell stack according to one of the preceding claims, wherein by virtue of a detachable design of the sealing frame (1) each fuel cell (FC) unit (4) is individually testable with regard to its operating properties.

5. Method of operating a fuel cell (FC) stack, which is constructed according to claim 1 or one of claims 2 to 4, wherein between the individual FC units (4) of the fuel cell stack the cooling liquid is conveyed through the axial channels (1a, 1b) in the sealing frame (1).

## Revendications

1. Empilement de piles à combustible comprenant au moins deux unités (4) de piles (BZ) à combustible et des séparateurs (4a, 4b) interposés entre elles, dans lequel un cadre (1) d'étanchéité entoure de manière étanche l'intervalle compris entre les séparateurs (4a, 4b) des unités (4) de piles à combustible en vue de recevoir un milieu de refroidissement, des canaux (1a, 1b) axiaux étant formés par l'empilement des unités (4) de piles à combustible avec des anneaux (6) d'appui interposés entre elles et ayant des perçages axiaux et radiaux.

2. Empilement de piles à combustible suivant la revendication 1, dans lequel les canaux (4a, 4b) d'alimentation et de répartition du fluide de refroidissement sont intégrés au cadre (1) d'étanchéité.

3. Empilement de piles à combustible suivant l'une des revendications précédentes, dans lequel le cadre (1) d'étanchéité dépasse de l'empilement de piles à combustible sur le pourtour.

4. Empilement de piles à combustible suivant l'une des revendications précédentes, dans lequel par une structure démontable du cadre (1) d'étanchéité chaque unité (4) de piles (BZ) à combustible peut être contrôlée individuellement du point de vue de ses propriétés de fonctionnement.

5. Procédé pour faire fonctionner un empilement de piles (BZ) à combustible, qui est constitué suivant la revendication 1 ou suivant l'une des revendications 2 à 4, qui consiste à faire passer entre les unités (4) de piles à combustible de l'empilement de piles à combustible le liquide de refroidissement par les canaux (1a, 1b) axiaux ménagés dans le cadre (1) d'étanchéité.
